Europäisches Patentamt

European Patent Office

Office européen des brevets

(19)

(11) Veröffentlichungsnummer: **0 097 802**
**B1**

(12) # EUROPÄISCHE PATENTSCHRIFT

(45) Veröffentlichungstag der Patentschrift:
22.07.87

(21) Anmeldenummer: 83104725.3

(22) Anmeldetag: 13.05.83

(51) Int. Cl.⁴: **F 16 J 15/40**, F 16 J 15/34

(54) **Fluidgesperrte Wellendichtung mit Fluidzuführ- und -abführbohrungen.**

(30) Priorität: 25.06.82 DE 3223703

(43) Veröffentlichungstag der Anmeldung:
11.01.84 Patentblatt 84/2

(45) Bekanntmachung des Hinweises auf die Patenterteilung:
22.07.87 Patentblatt 87/30

(84) Benannte Vertragsstaaten:
CH DE FR GB IT LI NL

(56) Entgegenhaltungen:
DE-A-2 134 964
DE-A-2 444 544
DE-A-2 558 651
FR-A-1 418 240
FR-A-2 385 013
GB-A-817 396
US-A-3 109 658
US-A-3 919 854

(73) Patentinhaber: **MAN GUTEHOFFNUNGSHÜTTE GMBH, Bahnhofstrasse, 66 Postfach 11 02 40, D-4200 Oberhausen 11 (DE)**

(72) Erfinder: **Albers, Rolf, Dinnendahlstrasse 61, D-4200 Oberhausen 11 (DE)**
Erfinder: **Aschenbruck, Emil, Sterkrader Strasse 495a, D-4100 Duisburg 11 (DE)**
Erfinder: **Neuhaus, Günter, Walsumermarkstrasse 254, D-4200 Oberhausen 14 (DE)**
Erfinder: **Kotzur, Joachim, Dr.- Ing., Holtkampstrasse 18, D-4200 Oberhausen 11 (DE)**

EP 0 097 802 B1

## Beschreibung

Die Erfindung betrifft eine gasgesperrte Wellendichtung mit radialem Dichtspalt, der zwischen einem mit der Welle rotierenden ersten Dichtring und einem stillstehenden, an den ersten Dichtring angepreßten, zweiten Dichtring gebildet ist, wobei in der Stirnseite eines der Dichtringe im Bereich des Dichtspaltes zum Aufbau wenigstens einer ringförmigen Zone höheren Gasdrucks fördernde Spiralnuten eingebracht und gleichmäßig verteilt am äußeren und inneren Umfang der Stirnseite angeordnet sind, und bei der Zuführbohrungen für ein Sperrgas mit ihren Drehkreisen zwischen den inneren und äußeren Spiralnuten im Bereich des Dichtspaltes liegen.

Eine derartige Wellendichtung ist aus der US-A-3 109 658 bekannt. In dieser Schrift ist eine fluidgesperrte Wellendichtung mit radialem Dichtspalt zwischen einem mit der Welle rotierenden Dichtring und einem stillstehenden, über ein dichtendes Rückstellelement angepreßten Gegenring bekannt. Wenigstens im peripheren Bereich des Dichtspaltes sind Spiralnuten zum Aufbau einer ein radiales Entweichen von Sperrfluid verhindernden ringförmigen Gegendruckzone vorgesehen. Die Spiralnuten sind so ausgelegt, daß sie bei einem vorgegebenen Betriebszustand ein Druckgleichgewicht zwischen zwei geförderten Sperrfluiden herstellen. Um nach Stillstand ein trockenes Anfahren ohne hydrostatisches oder pneumostatisches Polster zu verhindern, sind im mittleren Dichtspaltbereich Mittel zur Zufuhr von Drucköl vorgesehen, die jedoch nur in der Anlaufphase benutzt werden.

Ähnliche Dichtungen werden in der FR-A-14 18 240 und der GB-A-817 240 beschrieben. Bei diesen fluidgesperrten Wellendichtungen ist wenigstens eine, ein radiales Entweichen der Sperrfluide aus dem Bereich der Abführbohrungen verhindernde Zone höheren Fluiddruckes im Dichtspalt durch die Zuführung weiterer Fluidmengen erzeugbar.

Die Kombination der Dichtung mit einer Flüssigkeitsdichtung gegen die Atmosphäre ist aufwendig. Außerdem müssen zur Einhaltung des Gleichgewichtes der Drücke im Dichtspalt die Betriebsparameter sorgfältig eingehalten werden. Infolgedessen kann bei der bekannten Vorrichtung nur durch aufwendige Überwachungs- und Regeleinrichtungen mit Sicherheit ein radialer Durchbruch von Sperrfluid insbesondere in der Anfahrphase verhindert werden. Als weiterer Nachteil kommt hinzu, daß Sperröl nur im Kontakt mit reaktionsträgen Gasen verwendet werden kann, hingegen nicht mit reaktionsfähigen Gasen wie Sauerstoff oder Wasserstoff.

Es stellt sich die Aufgabe, eine gasgesperrte Wellendichtung mit radialem Dichtspalt der genannten Gattung anzugeben, bei der mit Hilfe der Zone höheren Gasdruckes ein Entweichen des Sperrgases verhindert und trotzdem mit zwei Sperrgasen unter Wiederverwendung gearbeitet werden kann, wobei auch bei hohen Drehzahlen ein kleiner Abstand zwischen den Dichtringen gewährt werden kann.

Die Lösung der Aufgabe gelingt bei einer gasgesperrten Wellendichtung mit radialem Dichtspalt der eingangs genannten Gattung dadurch, daß im Bereich zwischen den inneren und äußeren Spiralnuten auf mehreren Drehkreisen Zu- und Abführbohrungen für Sperrgase angeordnet sind.

Weiterhin ist auf dem Gebiet der fluidgesperrten Wellendichtung eine solche bekannt (DE-A1-21 34 964), bei der als Sperr- und Leitmedium in sichelförmige Nuten innerhalb des Dichtspaltes ein Gas, z. B. Helium, Stickstoff oder Wasserstoff, unter Druck eingeleitet wird. Zur Verringerung von Sperrgasverlust ist ein nicht drehbarer Dichtring in allen Richtungen bezüglich der Wand frei beweglich und mit dieser durch eine oder mehrere verformbare dichte Wände verbunden. Ferner kann beim nicht drehbaren Dichtring wenigstens eine kontinuierliche ringförmige Abführungsnut vorgesehen sein, mit der es möglich ist, wenigstens einen Teil des Dichtungsmediums wieder im Kreislauf zurückzuführen, damit sich dieses nicht mit der Atmosphäre in dem einen oder anderen der beiden Räume mischen kann. Die bekannte Wellendichtung hat den Nachteil, daß trotz der aufwendigen beweglichen Anordnung des feststehenden Dichtringes nur eine relativ eng begrenzte Druckzone im mittleren Dichtspaltbereich aufgebaut wird. Demzufolge muß dort ein relativ hoher Druck erzeugt werden, wodurch auch bei Anordnung von Abführkanälen ein Entweichen von Sperrgas am inneren oder äußeren Ende des Dichtspaltes nicht mit Sicherheit vermieden werden kann.

Eine andere fluidgesperrte Wellendichtung, die verhindern soll, daß das Sperrfluid selbst nicht in die Atmosphäre gelangt, ist aus der DE-A1-25 58 651 bekannt. Bei dieser Dichtung ist vorgesehen, zwischen Sperrfluid und Atmosphäre ein billigeres, besser in die Atmosphäre ableitbares Sperrfluid zuzugeben, wobei auf eine Kombination mit einer aufwendigen Flüssigkeitsdichtung verzichtet wird. Vorzugsweise soll dabei die Dichtung verfahrensseitig mit einem für das Verfahrensgas zuträglichen Sperrgas und atmosphärenseitig mit einem neutralen Gas gesperrt werden, welches ohne Schaden in die Atmosphäre entweichen kann. Das Sperrgasgemisch, welches sich zwischen beiden Dichtungen sammelt, soll kontrolliert abgezogen und vernichtet werden. Hierfür sind mit dem Gehäuse zwei feststehende Ringe jeweils durch eine elastische Wand verbunden und ein umlaufender Ring gasdicht auf der Welle beidseitig durch federnde Hülsen befestigt. Die feststehenden Ringe weisen im Dichtspalt je eine ringförmige Nut auf, die mittels Bohrungen und elastischen Leitungen an eine Druckgasquelle angeschlossen sind. Die bekannte Dichtung erfüllt die Forderung, daß nur kleine Sperrgaseinströme in den Verfahrensraum erfolgen. Da jedoch eine Rückführeinrichtung für Sperrgas nicht vorgesehen ist, lassen sich solche Sperrgaseinströme nicht vermeiden. Infolgedessen ist die Anwendung der bekannten Dichtung auf solche Verfahrensgase beschränkt, die durch geringe Sperrgasbeimengungen nicht schädlich beeinflußt werden. Darüber hinaus ist der mechanische Aufwand für diese Dichtung relativ hoch.

Schließlich sei noch auf die DE-A1-24 44 544 (FR-A-23 85 013) der Anmelderin verwiesen. Auch hier sind Spiralnuten bekannt, die für eine Gasdichtung verwendet werden. Bei diesem Stand der Technik werden jedoch diese Rillen dazu verwendet, lediglich eine dynamische Druckerhöhung im Bereiche der Spiralrillen zu erzeugen. Dieser letztgenannte Effekt ist auch der vorliegenden Erfindung ein willkommener Vorteil. Überraschend ist jedoch, daß sich die durch die Spiralnuten aufbauenden Zonen höheren Fluiddrucks dazu eignen, das Ausströmen der dichtenden Fluide aus dem Dichtringbereich zu verhindern.

Dadurch, daß gemäß vorliegender Erfindung im äußeren Radiusbereich ebenso wie im inneren Radiusbereich des Dichtspaltes durch Anordnung fördernder Spiralnuten zwei ringförmige Zonen höheren Gasdrucks gebildet werden, ergibt sich außerdem ein im Verhältnis zur Dichtfläche relativ großflächiges Druckpolster mit verbesserter Sperrwirkung. Dadurch, daß im Bereich zwischen den inneren und äußeren Spiralnuten auf mehreren Drehkreisen Zu- und Abführbohrungen für Sperrgase angeordnet sind, lassen sich Sperrgasverluste minimalisieren. Auch wird mit der verbesserten Ausgestaltung nach der Erfindung eine Vermischung von Sperrgas und Prozeßgas praktisch vermieden. Durch die Konfiguration und Lage der Zu- und Abführungsbohrungen gegenüber den sich einstellenden Gegendruckzonen im äußersten und innersten Ringbereich gelingt eine weitgehend verlustlose Abführung der Sperrgase oder des Sperrgases mit der Möglichkeit der Wiederverwendung.

Im folgenden wird die Erfindung anhand eines in der Zeichnung dargestellten Ausführungsbeispieles mit ihren Vorteilen näher erläutert. Die Figuren zeigen:

Fig. 1 eine Schnittdarstellung einer gasgesperrten Wellendichtung mit radialem Dichtspalt nach der Erfindung,

Fig. 2 eine Ansicht gegen den feststehenden Dichtungsring gemäß Fig. 1,

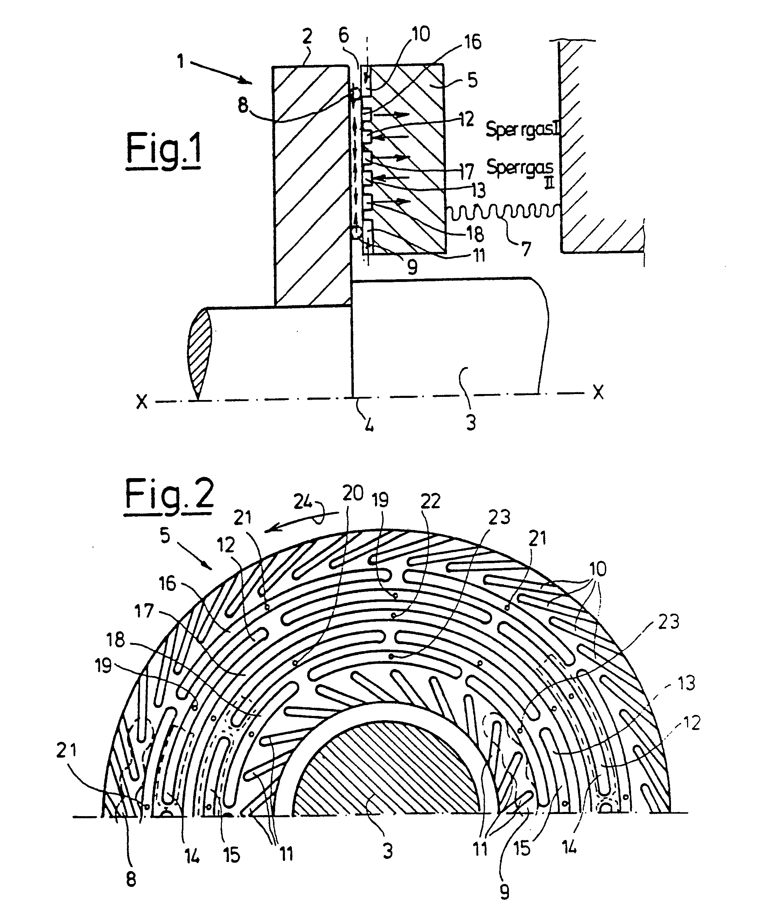

In Fig. 1 ist eine gasgesperrte Wellendichtung 1 dargestellt, bei der eine Welle 3 mit einem umlaufenden, flanschartigen Dichtungsring 2 fest verbunden ist. Die Wellenachse 4, die in Richtung X-X verläuft, wird mit Hilfe eines zweiten Dichtungsringes 5 abgedichtet. Der umlaufende Dichtungsring 2 ist von dem anderen, nichtumlaufenden Dichtungsring 5 über einen Dichtspalt 6 mit beispielsweise 5 bis 20 μ Breite getrennt. Der feste Dichtungsring 5 wird gegen den ersten Dichtungsring 2 gegen dessen im wesentlichen ebene Stirnfläche gedrückt, und zwar mit Hilfe eines elastischen Dichtungselementes 7, im vorliegenden Falle einer umlaufenden faltenbalgartigen Metall-Membran.

Im Dichtspalt 6 werden sowohl vom peripheren als auch vom achsennahen Bereich des Dichtungsringes 5 her Zonen 8, 9 höheren Gasdruckes mit Hilfe von fördernden Spiralnuten 10, 11 aufgebaut. Dabei ergeben sich ringförmige Zonen 8, 9 höheren Gasdruckes (Gaspolster), die zu einer Stabilisierung der sich mit hoher Geschwindigkeit relativ gegeneinander drehenden Dichtungsringe 2 bzw. 5 beitragen.

Im Bereich zwischen den inneren und äußeren Spiralnuten 11 bzw. 10 sind auf mehreren Drehkreisen 12, 13, 16, 17, 18 Zu- und Abführbohrungen angeordnet. Sperrgase I und II, z. B. Helium und Stickstoff, oder ein einziges Sperrgas, z. B. Helium, werden über in die Dichtring-Stirnfläche eingelassene sichelförmige Nuten 12, 13 im mittleren Bereich des Dichtspaltes 6 unter Druck zugeführt. Zu beiden Seiten der Zuführungsnuten 12, 13 sind Abführungsnuten 16, 17, 18 für das Sperrgas bzw. die Sperrgase vorgesehen. Diese können damit größtenteils zurückgewonnen und im Kreislauf erneut in den Dichtspalt zurückgeführt werden. Die Zuführungsnuten 12, 13 sind an Zuführungsbohrungen 19, 20 angeschlossen, die auf mehreren Drehkreisen angeordnet sind. Durch die Zuführungsbohrungen wird über (nicht dargestellte) Leitungen - wie bekannt - Sperrgas unter Druck zugeführt. Entsprechend sind die Abführungsnuten 16, 17, 18 an Abführungsbohrungen 21, 22, 23 angeschlossen, die über flexible Abführungsleitungen (nicht dargestellt) in den Sperrgaskreislauf einmünden.

Fig. 2 zeigt in Draufsicht die Ausgestaltung des feststehenden Dichtungsringes 5 an der die Dichtung bildenden Stirnseite. Hieraus ist die Anordnung und Lage der fördernden Spiralnuten 10, 11 zu erkennen, die bei einer Relativbewegung im Sinne des Richtungspfeiles 24 gegenüber dem umlaufenden Dichtungsring 2 jeweils Atmosphärengas bzw. Prozeßgas vom äußeren Spaltbereich zum inneren Dichtungsspaltbereich fördern und die ringförmigen Zonen 8, 9 erhöhten Gasdruckes ausbilden. Des weiteren ist aus der Fig. 2 die Anordnung der Zuführungsnuten 12, 13 der Sperrgas-Abführungsnuten 16, 17, 18 der Zuführungsbohrungen 19, 20 sowie der Abführungsbohrungen 21, 22, 23 ersichtlich.

Selbstverständlich können in kinematisch umgekehrter Anordnung die fördernden Spiralnuten 10, 11 anstelle der Anordnung im feststehenden Dichtring 5 auch in einem Dichtungsring 2 vorgesehen sein, der mit der Welle 3 rotiert.

## Patentansprüche

Gasgesperrte Wellendichtung mit radialem Dichtspalt, der zwischen einem mit der Welle (3) rotierenden ersten Dichtring (2) und einem stillstehenden, an den ersten Dichtring angepreßten, zweiten Dichtring (5) gebildet ist, wobei in der Stirnseite eines der Dichtringe im Bereich des Dichtspaltes (6) zum Aufbau wenigstens einer ringförmigen Zone höheren Gasdruckes fördernde Spiralnuten (10, 11) eingebracht und gleichmäßig verteilt am äußeren und inneren Umfang der Stirnseite angeordnet sind, und bei der der Lochkreis der Zuführbohrungen (19, 20) für ein Sperrgas zwischen den inneren (11) und äußeren Spiralnuten (10) im Bereich des Dichtspaltes liegt, dadurch gekennzeichnet, daß im Bereich zwischen den inneren (11) und äußeren (10) Spiralnuten auf mehreren Lochkreisen (12, 13, 16, 17, 18), Zu- (19, 20) und Abführbohrungen (21, 22, 23) für Sperrgase angeordnet sind.

## Claim

Gas blocked shaft seal with a radial sealing gap which is formed between a first sealing ring (9) rotating with the shaft (3), and a stationary second sealing ring (5) pressed against the first sealing ring, spiral grooves (10, 11) being provided in the face of one of the sealing rings and arranged uniformly distributed around the inner and outer periphery of the said face for establishing at least one annular zone of higher gas pressure, and in which a ring of supply bores (19, 20) for a blocking gas is disposed between the inner (11) and outer (12) spiral grooves in the region of the sealing gap, characterised in that supply and discharge bores (19, 20) for the blocking gas are arranged in a plurality of hole rings (12, 13, 16, 17, 18) in the region between the inner and outer spiral grooves (10, 11).

## Revendication

Garniture d'arbre étanche aux gaz, avec un interstice radial d'étanchement, ménagé entre un premier anneau d'étanchement (2) tournant avec l'arbre (3) et un deuxième anneau d'étanchement immobile (5), pressé contre le premier anneau d'étanchement, des gorges en spirales (10, 11), favorisant l'établissement d'au moins une zone annulaire de pression de gaz plus élevée, étant ménagées sur la face frontale d'un des anneaux d'étanchement au voisinage de l'interstice d'étanchement (6), et étant uniformément réparties sur la périphérie externe et interne de cette face frontale, garniture dans laquelle le cercle de perçage des trous d'alimentation (19, 20) pour un gaz d'étanchement, se situe entre les gorges en spirale internes (11) et les gorges en spirales externes (10) au voisinage de l'interstice d'étanchement, garniture caractérisée en ce que dans la zone entre les gorges en spirales intérieures (11) et extérieures (10) des trous d'alimentation et d'évacuation (19, 20) pour les gaz d'étanchement sont disposés sur plusieurs cercles de perçages (12, 13, 16, 17, 18).

# Fig.1

Sperrgas I

Sperrgas II

# Fig.2